# EUROPÄISCHE PATENTSCHRIFT

(11) **EP 2 805 770 B1**
(45) Veröffentlichungstag und Bekanntmachung des Hinweises auf die Patenterteilung: **30.11.2016**
(21) Anmeldenummer: 14164598.6
(22) Anmeldetag: 14.04.2014
(51) Int. Cl.: B01L 3/00

(54) **Behälter für den Laborbereich sowie Verfahren zur Kennzeichnung eines derartigen Behälters**
Container for the laboratory area and method for identifying such a container
Récipient pour le domaine des laboratoires et procédé de caractérisation d'un tel récipient

(30) Priorität: 02.05.2013 CH 9042013
(43) Veröffentlichungstag der Anmeldung: 26.11.2014
(73) Patentinhaber: Weidmann Medical Technology AG, 8640 Rapperswil (CH)
(72) Erfinder: TINNER, John, 6438 Ibach (CH); MAZENAUER, Karl, 8645 Jona (CH); ALBERT, Walter, 8782 Rüti (CH)
(74) Vertreter: Rutz, Andrea

(56) Entgegenhaltungen:
- EP-A1- 2 253 959
- US-B1- 6 270 728

## Beschreibung

### TECHNISCHES GEBIET

Die vorliegende Erfindung betrifft einen Behälter für den Laborbereich mit einer Kennzeichnung in Form von maschinenlesbaren Daten und ein Verfahren zur Kennzeichnung eines derartigen Behälters mit maschinenlesbaren Daten.

### STAND DER TECHNIK

Es ist bekannt, Behälter für den pharmazeutischen Laborbereich mit maschinenlesbaren Daten bzw. Kennzeichnungen zu versehen. Die Kennzeichnung dient der eindeutigen Identifikation eines Behälters und ermöglicht die Zuordnung von behälterspezifischen Informationen zu einem Behälter.

Im pharmazeutischen Laborbereich wird eine grosse Menge von Behältern in verschiedensten Ausführungen zur Untersuchung vom sich darin befindendem Inhalt benötigt. Der Inhalt der Behälter unterscheidet sich in den meisten Fällen und somit ist eine individuelle Kennzeichnung der Behälter unabdinglich. Da meist eine Vielzahl von gleichen Behältern gleichzeitig zum Einsatz kommt, ist das automatische Erkennen der Kennzeichnung mit einem optischen Lesegerät von Vorteil. So kann eine grössere Anzahl von Behältern in kürzerer Zeit und mit grösserer Zuverlässigkeit erfasst werden. Die Kennzeichnungen sollen daher die Form von maschinenlesbaren Daten, wie zum Beispiel Matrix-, Punkt- oder Strichcodes, aufweisen.

Die US 6,372,293 offenbart eine Küvette mit einer an der Oberfläche angeordneten, maschinenlesbaren Kennzeichnung, welche aus einer opaken Mehrfachbeschichtung besteht. Eine erste Schicht wird auf der Küvette aufgebracht und von einer farblich kontrastierenden zweiten Schicht überdeckt. In der zweiten Schicht werden Aussparungen in der Form von maschinenlesbaren Daten erzeugt. Die Lesbarkeit ergibt sich aus dem Farbkontrast der beiden Schichten.

Ein Problem mit derartigen Küvetten ist, dass eine Beschädigung der äusseren Schicht zur Unlesbarkeit der Kennzeichnung führen kann. Zudem ist die Herstellung der Küvette komplex und somit mit hohen Herstellkosten verbunden, da zwei unterschiedliche Schichten aufgebracht werden, wobei zudem darauf geachtet werden muss, dass ausschliesslich in der zweiten Schicht eine Aussparung erzeugt wird.

Die US 6,270,728 offenbart eine transparente Küvette mit einem daran befestigten opaken Trägerteil, welches eine maschinenlesbare Kennzeichnung aufweist, wobei die Kennzeichnung eine eingebrannte Punktkodierung ist. Die Lesbarkeit ergibt sich aus dem Farbkontrast des Trägerteils und der eingebrannten Kennzeichnung.

Ein Problem mit derartigen Küvetten ist ebenfalls, dass eine Beschädigung der äusseren Schicht zur Unlesbarkeit der Kennzeichnung führen kann.

### DARSTELLUNG DER ERFINDUNG

Es ist also eine Aufgabe der vorliegenden Erfindung, einen mit maschinenlesbaren Daten versehenen Behälter für den Laborbereich bereitzustellen, welcher einfach und kostengünstig herstellbar ist, und bei welchem die maschinenlesbaren Daten von einem optischen Lesegerät zuverlässig und gut erkennbar sind. Diese Aufgabe wird gemäss der Erfindung gelöst durch einen Behälter für den Laborbereich wie er im Anspruch 1 angegeben ist. Ausserdem wird ein Verfahren zur Kennzeichnung eines Behälters für den Laborbereich in dem Anspruch 12 angegeben. Weitere Ausführungsformen sind in den abhängigen Ansprüchen angegeben.

Ein erfindungsgemässer Behälter für den Laborbereich weist einen Körper, insbesondere einen einstückig ausgebildeten Körper, sowie eine auf den Körper aufgebrachte, für ein optisches Lesegerät opake Schicht auf, wobei die opake Schicht Aussparungen in der Form von maschinenlesbaren Daten aufweist. Der Körper weist zumindest eine lokale Materialveränderung auf, welche gemeinsam mit der opaken Schicht einen Lesebereich bildet. Im Lesebereich sind die maschinenlesbaren Daten aufgrund des optischen Kontrastes zwischen der Materialveränderung und der opaken Schicht von einem optischen Lesegerät von aussen her erfassbar.

Das Merkmal, dass der Behälter für den Laborbereich geeignet ist, bedeutet, dass der Behälter für wenigstens eine Laboranwendung geeignet ist. Diese Anwendung ist beispielsweise eine chemische Anwendung oder eine pharmazeutische Anwendung. Die Laboranwendung ist bevorzugt im pharmazeutischen Laborbereich, d.h. der Wirkstoffentwicklung, oder ist bevorzugt im diagnostischen Laborbereich oder ist bevorzugt eine diagnostische Anwendung, welche im Heimbereich stattfindet.

Maschinenlesbare Daten sind Daten, welche von einem optischen Lesegerät erkennbar sind und bevorzugt von einem Menschen nicht ohne Weiteres lesbar sind. Es kann sich bei den maschinenlesbaren Daten insbesondere um einen Matrix-, Punkt- und/oder Strichcode handeln.

Durch das Anbringen der maschinenlesbaren Daten direkt auf bzw. im Körper wird eine zuverlässige Kennzeichnung zur Verfügung gestellt, welche nicht vom Körper entfernbar ist. Durch die auf dem Körper aufgebrachte, mit Aussparungen versehene opake Schicht, wird der optische Kontrast bezüglich der Kennzeichnung verstärkt, was eine bessere Erkennbarkeit der Kennzeichnung zur Folge hat.

Der Körper, insbesondere der einstückige Körper, kann aus einem einzigen oder aus mehreren unterschiedlichen Materialien hergestellt sein. Unterschiedliche Materialien können in der Form von Gemischen zum Einsatz kommen. Beispielsweise kann ein erstes Material in einem zweiten Material eingelagert werden. Es können auch mehrere unterschiedliche Materialien in einem weiteren anderen Material eingelagert werden. Beispielsweise können Partikel eines oder mehrerer Materialien in einem weiteren unterschiedlichen Material eingelagert werden.

Optische Lesegeräte senden in der Regel Licht einer bestimmten Wellenlänge aus und messen und werten das vom bestrahlten Objekt reflektierte Licht aus. Optische Lesegeräte können einen Erkennungsbereich vom ultravioletten (100 bis 380 nm) über den infraroten (780 nm bis 400 µm) bis zum Mikrowellenbereich (400 µm bis 25 cm) des Lichtspektrums aufweisen. Der für den Menschen von Auge sichtbare Bereich liegt bei ca. 380 bis 780 nm. Wird in dieser Schrift etwas als transparent, semitransparent oder opak beschrieben, so bezieht sich dies im Wesentlichen jeweils auf den gesamten Wellenlängenbereich des Lichts (100 nm bis 25 cm), vorzugsweise auf den für den Menschen sichtbaren Wellenlängenbereich des Lichts (380 bis 780 nm).

Gemäss einer bevorzugten Ausführungsform weist der Körper des Behälters wenigstens eine mit einem Material, wie beispielsweise einer Flüssigkeit oder einem Feststoff, befüllbare Kavität auf. Der Behälter wird dann also grösstenteils und insbesondere im Wesentlichen durch den Körper, insbesondere durch den einstückigen Körper, gebildet. Bevorzugt ist die opake Schicht auf einer Wandung angeordnet, welche die Kavität begrenzt, wobei die Wandung bevorzugt wenigstens einen Teilbereich der Aussenseite des Behälters bildet. Vorzugsweise ist der Behälter als eine Küvette ausgebildet. Es sind jedoch grundsätzlich jegliche Arten von Behältern für den Laborbereich denkbar, wie beispielsweise ein als Mikrotiterplatte oder als Kartusche ausgebildeter Behälter. Bevorzugt weist die Mikrotiterplatte als Bestandteil wenigstens eine der im Rahmen dieses Schutzrechtes beschriebene, erfindungsgemässe Küvette auf. Unter einer Kartusche ist beispielsweise ein Behälter zu verstehen, der eine Kavität zur Aufnahme eines Reagens, insbesondere eines Reaktionsreagens, aufweist. Die erfindungsgemässe Küvette kann in Abhängigkeit von deren Verwendung unterschiedlich ausgebildet sein. Die Küvette kann beispielsweise derart ausgebildet sein, dass mit dieser Flüssigkeiten und / oder Feststoffe kurzfristig oder langfristig aufbewahrt werden können oder die Küvette kann beispielsweise derart ausgebildet sein, dass mit dieser optische Messungen durchgeführt werden können. Die Küvette kann beispielsweise auch als Reaktionsbehälter ausgebildet sein. Der Körper der Küvette weist bevorzugt einen Boden sowie eine umlaufende, geschlossene Seitenwand auf, welche auf ihrer Unterseite den Boden umrandet. Der Boden und die Seitenwand begrenzen eine gegen oben offene Kavität der Küvette. Der Boden kann auf seiner Innenseite konkav und auf seiner Aussenseite plan ausgebildet sein. Der Körper der Küvette kann unterschiedliche Abmessungen aufweisen. Der Körper weist beispielsweise, falls die Bodenoberfläche des Körpers rechteckig oder quadratisch ausgebildet ist, eine Breite von 2 mm (Milimeter) bis 105 mm sowie eine Tiefe von 2 mm bis 105 mm sowie eine Höhe von 0.5 mm bis 80 mm auf. Falls der Körper eine als Kreisfläche ausgebildete Bodenoberfläche umfasst, weist die Kreisfläche beispielsweise einen Durchmesser von 0.8 mm bis 15 mm auf. Die Höhe des Körpers, welcher eine als Kreisfläche ausgebildete Bodenoberfläche aufweist, beträgt beispielsweise 0.5 mm bis 80 mm. Die Dicke der Seitenwand des Körpers beträgt beispielsweise 0,5 bis 2 mm, vorzugsweise 0,7 bis 1,2 mm. Die Dicke des Bodens des Körpers beträgt beispielsweise 0,3 bis 2 mm, vorzugsweise 0,5 bis 0,8 mm. Die Bodenoberfläche des Körpers weist beispielsweise eine Fläche von 4 mm² bis 12'000 mm² auf.

Gemäss einer bevorzugten Ausführungsform ist die Zusammensetzung des Materials, aus welchem der Körper hergestellt ist, unterschiedlich zur Zusammensetzung des Materials, aus welchem die opake Schicht hergestellt ist.

In einer anderen bevorzugten Ausführungsform ist der Behälter ein Lager- oder Transportgestell mit einer Vielzahl von Aufnahmepositionen, insbesondere zur Aufnahme von im Vergleich zum Lager- oder Transportgestell kleineren Behältern wie beispielsweise Küvetten. Die Aufnahmepositionen weisen Öffnungen auf, welche mit den Abmessungen der darin anzuordnenden kleineren Behälter abgestimmt sind. Ein solcher kleinerer Behälter kann eine zur Kennzeichnung bzw. Kodierung des erfindungsgemässen Behälters in der Art ähnliche oder gleiche Kennzeichnung in Form von maschinenlesbaren Daten aufweisen. Diese Kennzeichnung kann die Informationen des Gestells aufweisen, in welchem der kleinere Behälter angeordnet ist. Ebenfalls kann die Kennzeichnung Informationen bezüglich der Position des kleineren Behälters im Gestell aufweisen. Die Kennzeichnung des Gestells kann Informationen bezüglich Anzahl und Position der darin aufgenommenen kleineren Behälter aufweisen. Grundsätzlich kann die Kennzeichnung des erfindungsgemässem Behälters sämtliche für den Laborbetrieb relevanten Daten, wie zum Beispiel Art, Zusammensetzung oder Menge des Inhalts, aufweisen.

In einer weiteren bevorzugten Ausführungsform ist der Behälter als Mikrotiterplatte ausgebildet.

Gemäss einer bevorzugten Ausführungsform weist der Behälter einen Boden auf, wobei die opake Schicht ausserhalb der Aussparungen wenigstens teilweise, bevorzugt vollständig, die Bodenunterseite des Behälters bildet. Bevorzugt ist die durch die opake Schicht gebildete Bodenunterseite des Behälters plan ausgebildet. Die plane Unterseite des Behälterbodens ermöglicht es in diesem Fall, dass der Behälter auf eine plane Unterlage gestellt werden kann.

Gemäss einer weiteren bevorzugten Ausführungsform weist der Behälter einen Boden auf, wobei der Körper wenigstens teilweise, bevorzugt vollständig, die Bodenunterseite des Behälters bildet. Bevorzugt ist die durch den Körper gebildete Bodenunterseite des Behälters plan ausgebildet. Die plane Unterseite des Behälterbodens ermöglicht es in diesem Fall, dass der Behälter auf eine plane Unterlage gestellt werden kann.

Gemäss einer bevorzugten Ausführungsform weist der Behälter eine Auskragung auf, welche bevorzugt durch den Körper gebildet ist, zum Abstellen des Behälters auf einer Ablagefläche.

Gemäss einer bevorzugten Ausführungsform ist die opake Schicht permanent auf dem Körper befestigt.

Werden die maschinenlesbaren Daten am oder im Boden, d.h. im Bereich der Unterseite des Behälters angebracht, d.h. beispielsweise die opake Schicht oder eine auf der opaken Schicht angeordnete Schutzschicht bildet wenigstens teilweise die Bodenunterseite des Behälters, so sind sie durch eine unterhalb des erfindungsgemässen Behälters, der beispielsweise als Gestell oder als Küvette oder als Mikrotiterplatte ausgebildet ist, angeordnete optische Leseeinheit einfach zugänglich und gut erkennbar. Die maschinenlesbaren Daten können dadurch zuverlässig durch das optische Lesegerät erfasst werden. Vorteilhaft werden die maschinenlesbaren Daten dabei aus einer annähernd senkrechten Richtung erfasst. Durch die Anordnung der maschinenlesbaren Daten am oder im Boden des Behälters ist zudem beispielsweise eine Lichttransmission, wie beispielsweise durch eine Seitenwandung des Behälters, für analytische Zwecke möglich.

Die maschinenlesbaren Daten können auch an oder in einer Seitenwandung des Behälters angeordnet sein. Möglich ist auch, dass die maschinenlesbaren Daten an oder in einem Verschlussmittel des Behälters angeordnet sind, welches eine mit Material befüllbare Kavität des Behälters verschliesst.

Gemäss einer bevorzugten Ausführungsform weist der Behälter wenigstens eine umlaufende, geschlossene Seitenwand auf, welche jeweils auf ihrer Unterseite einen Boden umrandet, wobei die wenigstens eine Seitenwand sowie der jeweilige Boden wenigstens eine Kavität, bevorzugt wenigstens eine offene Kavität, bevorzugter eine gegen oben offene Kavität, begrenzen.

Der Lesebereich wird durch die am Körper angeordnete opake Schicht und die am oder im Körper erzeugte Materialveränderung gebildet. Üblicherweise weist die opake Schicht grössere Abmessungen als die Materialveränderung auf. Es ist aber auch möglich, dass die Materialveränderung seitlich über die opake Schicht hinaus ragt. Die gute Lesbarkeit der Daten ergibt sich aus dem optischen Kontrast zwischen der Materialveränderung und der opaken Schicht. Vorzugsweise weisen die Materialveränderung und die opake Schicht einen Hell-Dunkel-Kontrast, wie beispielsweise einen Farbkontrast, welcher bevorzugt ein Schwarz-Weiss-Kontrast ist, auf. Vorzugsweise ist die Materialveränderung dunkel und die opake Schicht hell. Es sind jedoch auch helle Materialveränderungen mit dunklen opaken Schichten möglich. Vorzugsweise ist die Materialveränderung schwarz und die opake Schicht weiss. Es sind jedoch auch weisse Materialveränderungen mit schwarzen opaken Schichten möglich. Bevorzugt ist die Materialveränderung opak. Hierdurch ist die Wahrscheinlichkeit reduziert, dass im Behälter enthaltenes Material, wie beispielsweise eine Flüssigkeit oder ein Feststoff, das optische Lesegerät beeinflussen kann. Diese in diesem Abschnitt genannten, bevorzugten Ausführungsformen ergeben eine besonders gute Lesbarkeit der Daten durch ein optisches Lesegerät.

Gemäss einer bevorzugten Ausführungsform ist die Materialveränderung wenigstens durch eine Karbonisierung des Materials des Körpers oder wenigstens durch eine Aufschäumung des Materials des Körpers oder durch wenigstens eine Veränderung, insbesondere eine Verfärbung, von im Material eingebetteten Partikel, wie beispielsweise Pigmenten, erzeugt. Die genannten Arten der Materialveränderung ergeben einen besonders guten Kontrast. Unter der Karbonisierung des Materials wird im Rahmen dieser Schrift ein Verbrennen des Materials verstanden. Die Karbonisierung wird beispielsweise durch den Eintrag von thermischer Energie, beziehungsweise einer Wärmezufuhr, in das Material, wie beispielsweise mittels eines Lasers, bewirkt. Beim Aufschäumen des Materials wird Luft in das Material inkorporiert.

Nach einer bevorzugten Ausführungsform ist die Materialveränderung wenigstens im Bereich der Aussparungen angeordnet. Bevorzugter ist die Materialveränderung ausschliesslich in einem durch die Aussparungen freigelegten Bereich angeordnet. Eine ausschliesslich in einem durch die Aussparungen freigelegten Bereich angeordnete Materialveränderung ist besonders einfach herstellbar, wie beispielsweise mittels eines Lasers.

Gemäss einer bevorzugten Ausführungsform ist der Körper ein permanenter Bestandteil des Behälters. Dies bedeutet, dass der Körper vom restlichen Behälter nicht ablösbar ist. Der Körper kann aber auch derart ausgestaltet sein, dass dieser vom restlichen Behälter ablösbar und vorzugsweise wieder am Behälter befestigbar ist.

Besonders bevorzugt ist zumindest der Bereich des Körpers, auf welchem die opake Schicht angeordnet ist, insbesondere befestigt ist, wie beispielsweise wenigstens ein Teilbereich des Bodens des Körpers und / oder wenigstens ein Teilbereich der Seitenwandung des Körpers, aus Kunststoff hergestellt. Dies bedeutet, dass die wenigstens eine lokale Materialveränderung aus der Veränderung von Kunststoff resultiert. Die Verwendung von Kunststoff ermöglicht eine besonders kostengünstige Herstellung des erfindungsgemässen Behälters. Bevorzugt ist der Körper aus Kunststoff hergestellt. Hierdurch kann der erfindungsgemässe Behälter besonders einfach und kostengünstig hergestellt werden. Vorzugsweise ist der Kunststoff ein für ein optisches Lesegerät transparenter Kunststoff. In einer weiteren Ausführungsform ist der Kunststoff ein für das menschliche Auge transparenter Kunststoff. Herkömmliche transparente Kunststoffe sind zum Beispiel: Polypropylen, Polyethylen, Polystyrol, Polycarbonat oder Cyclo-Olefin-Copolymer, Acrylnitril-Butadien-Styrol. Behälter mit einem Körper aus transparentem Kunststoff haben den Vorteil, dass beispielsweise der Füllstand oder Veränderungen von im Behälter enthaltenem Material auch von aussen, durch den Körper beziehungsweise Behälter hindurch, erkennbar sind. Üblicherweise werden die Körper, wie sie oben beschrieben wurden, und welche ein Bestandteil des erfindungsgemässen Behälters bilden, im Spritzgussverfahren hergestellt.

Gemäss einer bevorzugten Ausführungsform ist der Körper einstückig ausgebildet. Hierdurch kann der Körper und somit auch der Behälter besonders einfach und kostengünstig hergestellt werden.

In einer bevorzugten Ausführungsform ist der Körper aus einem für das optische Lesegerät opaken Material oder opaken Materialien, wie beispielsweise einem Kunststoff, hergestellt. In der Kavität des Behälters enthaltenes Material, wie beispielsweise eine Flüssigkeit oder ein Feststoff, kann somit nicht das optische Lesegerät beeinflussen. Dem Fachmann sind opake Materialien, insbesondere opake Kunststoffe, bekannt.

Vorzugsweise umfasst die opake Schicht Kunststoff oder Metall oder Keramik oder wenigstens eine Lackschicht oder wenigstens eine Folie. Die opake Schicht weist bevorzugt eine Dicke von 1 Mikrometer bis 5 Milimeter, bevorzugter eine Dicke von 1 Mikrometer bis 2 Milimeter auf. Die opake Schicht kann einlagig oder mehrlagig sein. Bei Mehrlagigkeit sind die Lagen bevorzugt übereinander angeordnet. Bevorzugt weist die opake Schicht eine einzige Schicht auf. Ein erfindungsgemässer Behälter umfassend eine einzige Schicht ist besonders einfach und kostengünstig herstellbar. Ein Beispiel einer opaken Schicht stellt die sogenannte dem Fachmann bekannte Heissprägefolie dar. Eine solche Folie weist beispielsweise eine mit Pigmenten eingefärbte Folie und eine Verbindungsschicht zur Befestigung der eingefärbten Folie an den Körper auf. Die Heissprägefolie wird durch Wärmeeinwirkung und Druck auf den Körper aufgebracht, wobei sich die Heissprägefolie mit dem Körper verbindet. Solche Heissprägefolien weisen üblicherweise Dicken von 50 bis 80 µm auf.

Gemäss einer bevorzugten Ausführungsform ist die opake Schicht unmittelbar auf dem Körper aufgebracht. Diese Ausführungsform ist besonders einfach herstellbar. Vorteilhaft ist der Körper sowie die opake Schicht insgesamt einstückig und insbesondere im Zweikomponentenspritzgussverfahren hergestellt.

In einer weiteren bevorzugten Ausführungsform ist eine für ein optisches Lesegerät transparente Schutzschicht auf der opaken Schicht angeordnet. Diese Schicht bietet einen zusätzlichen Schutz gegen äussere Einflüsse und erhöht daher die Zuverlässigkeit der Kennzeichnung sowie die Erkennbarkeit der maschinenlesbaren Daten. Diese transparente Schicht füllt vorhandene Aussparungen, insbesondere in der opaken Schicht vorhandene Aussparungen, wenigstens teilweise, bevorzugt vollständig aus. Bevorzugt weist der Behälter einen Boden auf, wobei die transparente Schutzschicht wenigstens teilweise, bevorzugt vollständig, die Unterseite dieses Bodens des Behälters bildet. Bevorzugt ist die durch die transparente Schutzschicht gebildete Bodenoberfläche des Behälters plan ausgebildet. Die plane Oberfläche des Behälterbodens ermöglicht es, dass der Behälter auf eine plane Unterlage gestellt werden kann.

In einer weiteren bevorzugten Ausführungsform ist eine für ein optisches Lesegerät transparente Verbindungsschicht zwischen dem Körper und der opaken Schicht angeordnet. Vorzugsweise weist die transparente Verbindungsschicht einen Klebstoff auf. Die Verbindungsschicht kann auch opak sein. In diesem Fall erstrecken sich die Aussparungen durch die Verbindungsschicht hindurch.

Die Materialveränderung ist in einer bevorzugten Ausführungsform an einer Oberfläche des Körpers angeordnet. Die Anordnung an der Oberfläche ermöglicht ein einfaches Erzeugen der Materialveränderung und gewährleistet eine gute Lesbarkeit. Falls die Materialveränderung zudem unterhalb der Behälteroberfläche angeordnet ist, wie beispielsweise unterhalb der zumindest teilweise die Behälteroberfläche bildende opake, Schicht, ist sie geschützt gegenüber äusseren Einflüssen, was die Zuverlässigkeit der Kennzeichnung erhöht. Gemäss einer ersten Variante ist auf der Materialveränderung ausschliesslich die opake Schicht angeordnet. Bei dieser Variante erstrecken sich die Aussparungen durch die opake Schicht hindurch und ragen bis zu der / den Materialveränderung(en). Bei dieser ersten Variante kann das Material des Körpers opak oder transparent sein. Bei einer zweiten Variante ist auf der Materialveränderung die transparente Zwischenschicht angeordnet, auf welcher die opake Schicht angeordnet ist. Gemäss einer ersten Möglichkeit erstrecken sich die Aussparungen ausschliesslich durch die opake Schicht hindurch. Gemäss einer zweiten Möglichkeit erstrecken sich die Aussparungen durch die opake Schicht hindurch sowie teilweise in die transparente Schicht hinein. Gemäss einer dritten Möglichkeit erstrecken sich die Aussparungen durch die opake Schicht sowie die transparente Schicht hindurch und ragen somit bis zu der / den Materialveränderung(en). Bei dieser zweiten Variante kann das Material des Körpers opak oder transparent sein.

In einer weiteren bevorzugten Ausführungsform ist die Materialveränderung innerhalb des Körpers angeordnet. Die Anordnung im Innern bietet zusätzlichen Schutz gegen äussere Einflüsse, was die Zuverlässigkeit der Kennzeichnung erhöht. Gemäss einer ersten Variante ist ausschliesslich die opake Schicht im Bereich der Materialveränderung am Körper angeordnet. Gemäss einer ersten Möglichkeit erstrecken sich die Aussparungen ausschliesslich durch die opake Schicht hindurch. Zumindest das Material des Körpers zwischen der/den Materialveränderung(en) und der Körperoberfläche, auf welcher die opake Schicht angeordnet ist, ist dann transparent. Gemäss einer zweiten Möglichkeit erstrecken sich die Aussparungen in den Körper hinein. Falls die Aussparungen nicht bis zu der/den Materialveränderung(en) sich hin erstrecken, ist zumindest das Material des Körpers zwischen den Aussparungen und der/den Materialveränderung(en) transparent. Falls die Aussparungen sich bis zu der/den Materialveränderung(en) hin erstrecken, kann das Material des Körpers transparent oder opak sein. Gemäss einer zweiten Variante ist im Bereich der Materialveränderung(en) am Körper die transparente Zwischenschicht angeordnet, auf welcher die opake Schicht angeordnet ist. Gemäss einer ersten Möglichkeit erstrecken sich die Aussparungen ausschliesslich durch die opake Schicht hindurch. Gemäss einer zweiten Möglichkeit erstrecken sich die Aussparungen durch die opake Schicht hindurch sowie teilweise in die transparente Schicht hinein. Gemäss einer dritten Möglichkeit erstrecken sich die Aussparungen ausschliesslich durch die opake Schicht sowie die transparente Schicht hindurch. Gemäss einer vierten Möglichkeit erstrecken sich die Aussparungen durch die opake Schicht sowie die Zwischenschicht hindurch und ragen in das Material des Körpers hinein, wobei die Aussparungen sich nicht bis zu der / den Materialveränderung(en) hin erstrecken. Bei der genannten ersten, zweiten, dritten sowie vierten Möglichkeit ist dann wenigstens das Material des Körpers zwischen den Aussparungen und der / den Materialveränderung(en) transparent, damit das optische Lesegerät die Materialveränderung erkennen kann. Gemäss einer fünften Möglichkeit erstrecken sich die Aussparungen durch die opake Schicht sowie die Zwischenschicht hindurch und ragen bis zu der/den Materialveränderung(en). Bei dieser fünften Möglichkeit kann das Material des Körpers opak oder transparent sein.

In einer bevorzugten Ausführungsform sind die maschinenlesbaren Daten wenigstens teilweise, bevorzugt vollständig, als Punktcode ausgebildet. Eine Punktkodierung lässt sich besonders einfach herstellen, wie beispielsweise mittels eines Lasers.

Gemäss einer bevorzugten Ausführungsform ist die Distanz wenigstens zwischen zwei benachbarten Mittelpunkten der Aussparungen, welche bevorzugt im Querschnitt, insbesondere im Bereich der von aussen sichtbaren Oberfläche der opaken Schicht, kreisförmig, insbesondere als Kreisfläche, oder quadratisch ausgebildet sind, 0.4 Millimeter oder kleiner, bevorzugt 0.35 Millimeter oder kleiner.

Gemäss einer bevorzugten Ausführungsform sind die Dimensionen der Aussparungen, insbesondere im Querschnitt, 200 Mikrometer oder kleiner, bevorzugt 175 Mikrometer oder kleiner, bevorzugter zwischen 175 Mikrometer und 150 Mikrometer, noch bevorzugter 150 Mikrometer oder kleiner. Bevorzugt sind die Aussparungen im Querschnitt, insbesondere im Bereich der von aussen sichtbaren Oberfläche der opaken Schicht, kreisförmig, insbesondere als Kreisfläche, oder quadratisch ausgebildet, und weisen eine Dimension von 200 Mikrometer oder kleiner, bevorzugt 175 Mikrometer oder kleiner, bevorzugter zwischen 175 Mikrometer und 150 Mikrometer, noch bevorzugter 150 Mikrometer oder kleiner, auf. Falls die Aussparung im Querschnitt als Kreisfläche ausgebildet ist, so ist die Dimension der Durchmesser der Kreisfläche. Falls die Aussparung im Querschnitt quadratisch ausgebildet ist, so ist die Dimension die Seitenlänge des Quadrates

Je kleiner die genannte Distanz zwischen den Aussparungen ist und je kleiner die genannten Dimensionen der Aussparungen sind, desto mehr Informationen kann der Lesebereich aufweisen. Bevorzugt sind somit möglichst kleine Distanzen und / oder möglichst kleine Dimensionen.

Gemäss einer bevorzugten Ausführungsform sind die Aussparungen zylinderförmig oder quaderförmig ausgebildet, bevorzugt als geradlinig sich erstreckende Zylinder oder Quader ausgebildet. Zylinderförmige oder quaderförmige Aussparungen, insbesondere sich geradlinig erstreckende Zylinder oder Quader, können besonders einfach hergestellt werden, wie beispielsweise mittels eines Lasers.

Ein vorzugsweises Verfahren zur Kennzeichnung eines Behälters für den Laborbereich, welcher insbesondere wie oben beschrieben ausgebildet ist und einen Körper, insbesondere einen einstückig ausgebildeten Körper, mit einer darauf aufgebrachten opaken Schicht aufweist, weist zumindest die folgenden Schritte in beliebiger Reihenfolge auf:
- Erzeugen von Aussparungen in der Form von maschinenlesbaren Daten in der opaken Schicht; und
- Erzeugen von zumindest einer lokalen Materialveränderung im oder am Körper, bevorzugt wenigstens im Bereich der Aussparungen.
Die Aussparungen und die Materialveränderung werden dabei derart erzeugt, dass die opake Schicht gemeinsam mit der Materialveränderung einen Lesebereich bildet, in welchem aufgrund des optischen Kontrastes zwischen der Materialveränderung und der opaken Schicht die maschinenlesbaren Daten von einem optischen Lesegerät von aussen her erfassbar sind.

Ein weiteres, hierin offenbartes Verfahren zur Kennzeichnung eines Behälters für den Laborbereich, welcher insbesondere wie oben beschrieben ausgebildet ist und einen Körper, insbesondere einen einstückig ausgebildeten Körper, mit zumindest einer lokalen Materialveränderung aufweist, weist zumindest den folgenden Schritt auf:
- Vorsehen einer für ein optisches Lesegerät opaken Schicht mit Aussparungen in Form von maschinenlesbaren Daten auf dem Körper derart, dass die zumindest eine Materialveränderung gemeinsam mit der opaken Schicht einen Lesebereich bildet, in welchem aufgrund des optischen Kontrastes zwischen der Materialveränderung und der opaken Schicht die maschinenlesbaren Daten von einem optischen Lesegerät von aussen her erfassbar sind.

Vorzugsweise werden/wird bei diesen Verfahren das Erzeugen der Aussparungen in der opaken Schicht und/oder die Materialveränderung des Körpers durch chemische und / oder physikalische Verfahren realisiert. Ein chemisches Verfahren stellt z.B. das Ätzen dar. Bei den physikalischen Verfahren wird z.B. thermische Energie, wie beispielsweise mittels eines Lasers, lokal in den zu kennzeichnenden Körper eingebracht, oder der Körper wird lokal, z.B. durch Krafteinwirkung, wie beispielsweise durch eine Prägung, deformiert. Die Materialveränderung des Körpers hat üblicherweise eine Änderung seiner optischen Eigenschaften (Transmission, Absorption, Reflexion) zur Folge.

In einem bevorzugten Verfahren werden/wird das Erzeugen der Aussparungen wenigstens in der opaken Schicht und/oder die Materialveränderung des Körpers durch einen Laser realisiert. Durch die Verwendung eines Lasers ist die die Aussparungen begrenzende wenigstens eine Schicht, welche Aussparungen beispielsweise in der opaken Schicht sowie gegebenenfalls im Körper und / oder in der Schutzschicht angeordnet sind, im Wesentlichen nicht ausgefranst, beziehungsweise die Aussparungen weisen scharfe Konturen auf. Dies erlaubt eine gute und zuverlässige Lesbarkeit der maschinenlesbaren Daten durch ein optisches Lesegerät. Üblicherweise werden Nd: YAG-Laser oder CO₂-Laser oder Excimer-Laser verwendet. Bevorzugt werden Nd: YAG-Laser verwendet. Der Laser bewirkt eine lokale Erwärmung des Materials und führt so eine Materialveränderung herbei. Bei einer Materialveränderung an der Körperoberfläche erhitzt der Laserstrahl die Oberfläche beim Auftreffen auf diese und bewirkt beispielsweise eine Strukturänderung des Materials, wie beispielsweise durch eine Karbonisierung des Materials oder durch eine Aufschäumung des Materials. Bei einer Karbonisierung weist das veränderte Material, im Vergleich zum Material des Körpers vor dessen Veränderung, eine andere Farbe und/oder Helligkeit auf. In der Regel ist das veränderte Material, im Vergleich zum Material vor dessen Veränderung, beziehungsweise im Vergleich zum Ausgangsmaterial, dunkler. Bei einer Aufschäumung weist das veränderte Material, im Vergleich zum Ausgangsmaterial des Körpers, ebenfalls eine unterschiedliche Farbe und/oder Helligkeit auf. In der Regel ist das veränderte Material heller. Bei einer Materialveränderung im Körperinnern wird eine Erhitzung des Materials beispielsweise durch die Fokussierung eines Laserstrahls bzw. durch zwei sich kreuzende Laserstrahlen oder durch das Erhitzen von eingelagerten Partikeln durch den Laser erreicht. Erhitzt sich das Material im Innern direkt oder aufgrund der erwärmten Partikel, so kann dies sowohl eine Karbonisierung als auch eine Aufschäumung zur Folge haben. In einem weiteren Verfahren werden eingelagerte Partikel, beispielsweise Pigmente, durch die Einwirkung eines Laserstahls erwärmt und ändern als Folge davon ihre Farbe. Die eingelagerten Partikel können im ganzen Körper gleichmässig verteilt sein oder können in bestimmten Regionen, beispielsweise Schichten, wie beispielsweise in Randschichten, vermehrt vorhanden sein.

Eine Karbonisierung oder Aufschäumung des Materials, sowie die Verfärbung von Pigmenten sind selbstverständlich auch mit anderen, dem Fachmann bekannten Methoden ausser mittels eines Lasers möglich.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: schematisch eine perspektivische Darstellung eines erfindungsgemässen Behälters mit kodiertem Boden;
- Fig. 2: schematisch eine zentrale Schnittansicht des unteren Bereichs eines küvettenartigen Körpers welcher ein Bestandteil des als Küvette ausgebildeten Behälters gemäss Figur 1 ist;
- Fig. 3: schematisch eine zentrale Schnittansicht des unteren Bereichs einer ersten Ausführungsform eines erfindungsgemässen Behälters;
- Fig. 4: schematisch eine zentrale Schnittansicht des unteren Bereichs einer zweiten Ausführungsform eines erfindungsgemässen Behälters;
- Fig. 5: schematisch eine zentrale Schnittansicht des unteren Bereichs einer dritten Ausführungsform eines erfindungsgemässen Behälters;
- Fig. 6: schematisch eine zentrale Schnittansicht des unteren Bereichs einer vierten Ausführungsform eines erfindungsgemässen Behälters;
- Fig. 7: schematisch eine zentrale Schnittansicht des unteren Bereichs einer fünften Ausführungsform eines erfindungsgemässen Behälters;
- Fig. 8: schematisch eine zentrale Schnittansicht des unteren Bereichs einer sechsten Ausführungsform eines erfindungsgemässen Behälters;
- Fig. 9: schematisch eine zentrale Schnittansicht des unteren Bereichs einer siebten Ausführungsform eines erfindungsgemässen Behälters;
- Fig. 10: schematisch eine zentrale Schnittansicht des unteren Bereichs einer achten Ausführungsform eines erfindungsgemässen Behälters;
- Fig. 11a: schematisch eine perspektivische Darstellung der Oberseite einer neunten Ausführungsform eines erfindungsgemässen Behälters, welcher als Lageroder Transportgestells zur Aufnahme von Küvetten ausgebildet ist;
- Fig.11b: schematisch eine perspektivische Darstellung der Unterseite des erfindungsgemässen Behälters gemäss Fig. 11a;
- Fig. 12a-12c: schematisch Verfahrensschritte zur Herstellung einer zehnten Ausführungsform eines erfindungsgemässen Behälters;
- Fig.12d: schematisch eine zentrale Schnittansicht des unteren Bereichs einer elften Ausführungsform eines erfindungsgemässen Behälters; sowie
- Fig. 13a, 13b: schematisch Verfahrensschritte zur Herstellung eines erfindungsgemässen Behälters.

### BESCHREIBUNG BEVORZUGTER AUSFÜHRUNGSFORMEN

In den nachfolgend beschriebenen Ausführungsformen sind gleiche, ähnliche oder ähnlich wirkende Merkmale jeweils mit den gleichen Bezugszeichen versehen.

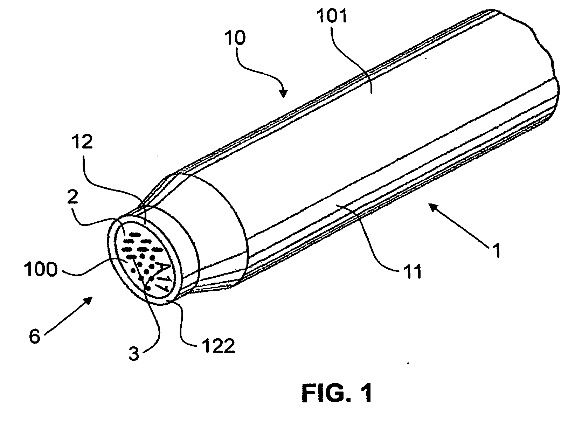

Die Figur 1 zeigt schematisch einen erfindungsgemässen Behälter 10 in Form einer Küvette, umfassend einen einstückig ausgebildeten Körper 1 sowie eine opake Schicht 2. Der Körper 1 umfasst einen Körperboden 12 mit einer Bodenoberfläche 122. Bei dem in Figur 1 dargestellten Behälter 10 ist auf der Bodenoberfläche 122 die opake Schicht 2 angeordnet, so dass die opake Schicht 2 die Bodenoberfläche bzw.-unterseite 100 des Behälters 10 bildet. Der Behälter 10 weist einen Lesebereich 6 auf, welcher mit maschinenlesbaren Daten versehen ist, welche von einem optischen Lesegerät von aussen her erfassbar sind. Der Lesebereich 6 weist die für das optische Lesegerät opake Schicht 2 und im Körper 1 erzeugte Materialveränderungen 3 auf, wobei die Lesbarkeit der maschinenlesbaren Daten bzw. der Kennzeichnung durch den optischen Kontrast zwischen der opaken Schicht 2 und den Materialveränderungen 3 gegeben ist. Der Lesebereich 6 wird durch die opake Schicht 2 und die Materialveränderungen 3 definiert. Die Kennzeichnung bzw. die maschinenlesbaren Daten dienen beispielsweise zur eindeutigen Identifizierung individueller Behälter. Grundsätzlich können die maschinenlesbaren Daten an einem beliebigen Ort an einer Aussenseite 101 des Behälters 10 und / oder an einer Innenseite des Behälters 10 angeordnet sein, wie beispielsweise an und / oder in einer Seitenwandung 11. Dieser als Küvette ausgebildete Behälter 10 kann beispielsweise verwendet werden, um Flüssigkeiten und / oder Feststoffe kurzfristig oder langfristig aufzubewahren.

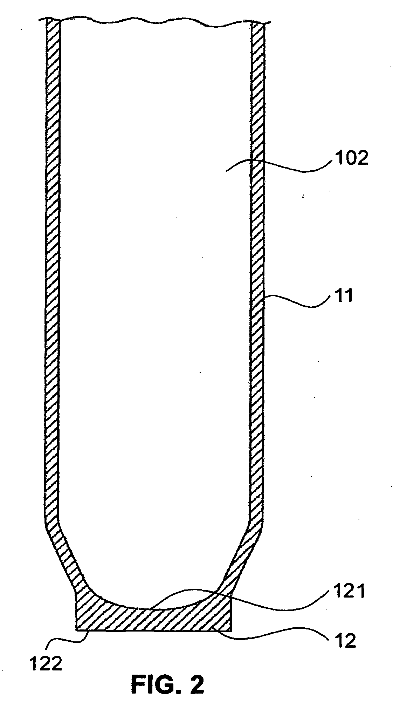

Figur 2 zeigt schematisch eine seitliche, zentrale Schnittansicht eines einstückigen, küvettenförmigen Körpers 1, welcher beispielsweise, wie in Figur 1 dargestellt, den Körper 1 des erfindungsgemässen Behälters 10 bildet. Der küvettenförmige Körper 1 weist keine maschinenlesbare Kodierung auf. Der einstückig ausgebildete küvettenförmige Körper 1 weist eine umlaufende Seitenwand 11 auf, die einen Boden 12 umrandet, wobei die Seitenwand 11 zusammen mit dem Boden 12 eine oben offene Kavität 102 definieren. Der küvettenförmige Körper 1 weist eine konkave Bodeninnenseite 121 und auf der Aussenseite eine plane Oberfläche 122 auf.

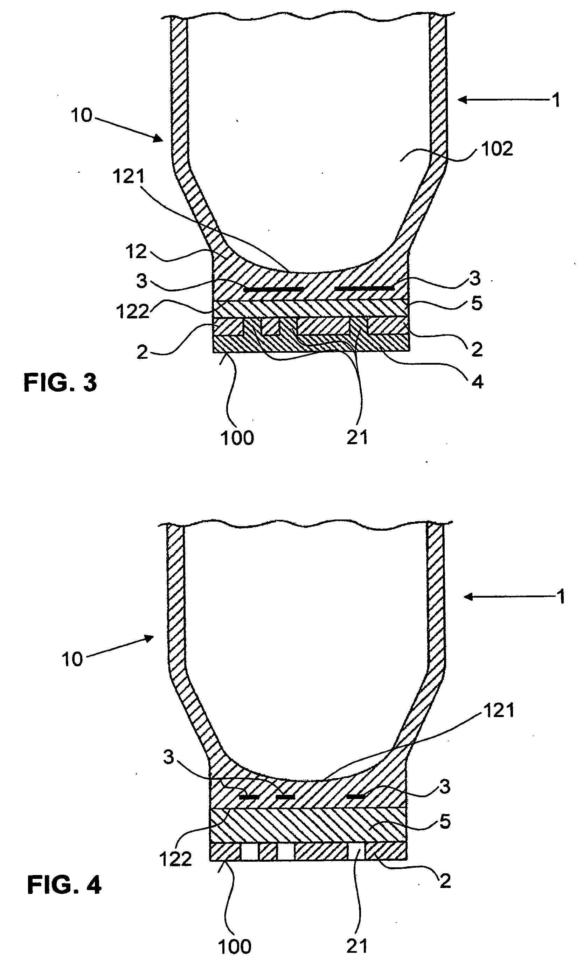

Figur 3 zeigt schematisch eine seitliche, zentrale Schnittansicht des unteren Bereichs einer ersten Ausführungsform eines erfindungsgemässen Behälters 10, der als Küvette ausgebildet ist und eine angedeutete, gegen oben offene Kavität 102 aufweist. Die Küvette weist den küvettenförmigen Körper 1 auf, welcher entsprechend demjenigen, welcher in der Figur 2 gezeigt ist, ausgebildet ist. Im Boden 12 des Körpers 1 sind lokale Materialveränderungen 3 vorhanden, welche sich bei dieser Ausführungsform im Innern des Körpers 1 befinden. An der Bodenoberfläche 122 des Körpers 1 ist eine opake Schicht 2 mittels einer transparenten Verbindungsschicht 5, wie beispielsweise einem Klebstoff, angebracht. Die Verbindungsschicht 5 überdeckt die gesamte Bodenoberfläche 122 des Körpers 1. Die opake Schicht 2 weist Aussparungen 21 im Bereich der Materialveränderungen 3 auf, durch welche die Materialveränderungen 3 von aussen her sichtbar sind. Bei der hier dargestellten Ausführungsform sind die Materialveränderungen 3 nicht nur im durch die Aussparungen 21 freigelegten Bereich vorhanden, sondern ragen seitlich über diese hinaus. Auf der opaken Schicht 2 und in den Aussparungen 21 ist eine transparente Schutzschicht 4 angeordnet. Diese Schutzschicht 4 ist nicht zwingend notwendig, sie erhöht jedoch die Verschleissfestigkeit und trägt so zur Erhöhung der Zuverlässigkeit der Kennzeichnung beziehungsweise der maschinenlesbaren Daten bei. Somit bildet die Schutzschicht 4 bei der Ausführungsform gemäss Figur 3 die Bodenoberfläche bzw. -unterseite 100 des Behälters 10. Das Material des Körpers 1 ist transparent, damit die Materialveränderungen 3 durch das optische Lesegerät erkennbar sind.

Figur 4 zeigt schematisch eine seitliche, zentrale Schnittansicht des unteren Bereichs einer zweiten Ausführungsform eines erfindungsgemässen Behälters 10, der als Küvette ausgebildet ist. Im Unterschied zur ersten Ausführungsform ist die transparente Verbindungsschicht 5 dicker ausgestaltet. Die Materialveränderungen 3 sind nur im Bereich der Aussparungen 21 vorhanden. Eine zusätzliche Schutzschicht ist nicht vorhanden. Bei dieser Ausführungsform bildet die opake Schicht 2 die Bodenoberfläche bzw. -unterseite 100 des Behälters 10. Das Material des Körpers 1 ist wiederum transparent, damit die Materialveränderungen 3 durch das optische Lesegerät erkennbar sind.

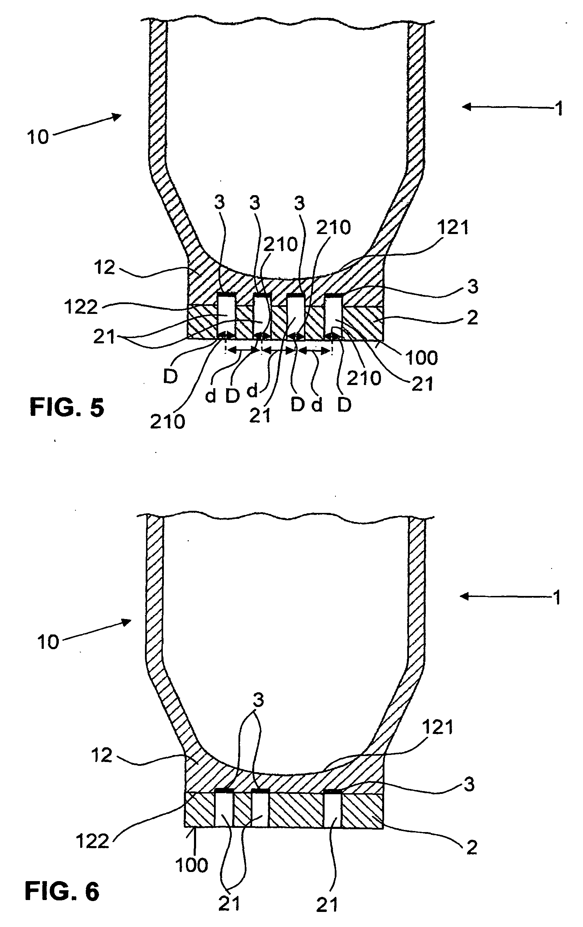

Figur 5 zeigt schematisch eine seitliche, zentrale Schnittansicht des unteren Bereichs einer dritten Ausführungsform eines erfindungsgemässen Behälters 10, der als Küvette ausgebildet ist. Der Körper 1 weist im Boden 12 lokale Materialveränderungen 3 auf, welche sich in dieser Ausführungsform an der Oberfläche des Körpers 1, aber vertieft im Boden 12 befinden. Auf der Bodenoberfläche 122 des Körpers 1 ist eine opake Schicht 2 direkt auf dieser angeordnet. Die opake Schicht 2 weist Aussparungen 21, welche als sich geradlinig erstreckende Zylinder ausgebildet sind, im Bereich der Materialveränderungen 3 auf, durch welche die Materialveränderungen 3 von aussen her sichtbar werden. Bei der Ausführungsform gemäss Figur 5 kann das Material des Körpers 1 transparent oder opak sein, da die Aussparungen 21 sich bis zu den Materialveränderungen 3 erstrecken.

Die Aussparungen 21 sind im Bereich der Oberfläche der opaken Schicht 2, welche die Bodenoberfläche 100 des Behälters 10 bildet, im Querschnitt als Kreisfläche ausgebildet und weisen einen Durchmesser D von 175 Mikrometer auf. Die Distanz d der Mittelpunkte 210 der im Bereich der Oberfläche der opaken Schicht 2 im Querschnitt als Kreisfläche ausgebildeten Aussparungen 21 beträgt 0,35 mm. Wie in Figur 5 ersichtlich, sind die maschinenlesbaren Daten als Punktkodierung ausgebildet. Bei der hier dargestellten Ausführungsform sind die Materialveränderungen 3 nur im durch die Aussparungen 21 freigelegten Bereich vorhanden. Die Aussparungen 21 setzen sich im Körperboden 12 fort und ragen bis zu den Materialveränderungen 3 in diesen hinein. Die Aussparungen 21 sowie die Materialveränderungen 3 werden vorzugsweise durch einen Laser erzeugt, wobei die Materialveränderungen 3 insbesondere durch eine Karbonisierung des Körpers 1 entstehen können. Bei dieser Ausführungsform gemäss Figur 5 bildet die opake Schicht 2 die Bodenoberfläche 100 des Behälters 10. Dem Fachmann ist grundsätzlich bekannt, wie lokale Materialveränderungen beim Material des Körpers 1, wie beispielsweise durch Karbonisierung oder Aufschäumung, insbesondere durch den Einsatz von Laser oder auch anderen dem Fachmann bekannten Mitteln, erzeugt werden können, und welche Materialien für den Körper 1 hierbei verwendet werden können. Dem Fachmann ist ebenso bekannt, wie Aussparungen in der opaken Schicht 2, insbesondere durch den Einsatz von Laser oder anderen dem Fachmann bekannten Mitteln, erzeugt werden können, und welche Materialien für die opake Schicht 2 verwendet werden können.

Figur 6 zeigt schematisch eine seitliche, zentrale Schnittansicht des unteren Bereichs einer vierten Ausführungsform eines erfindungsgemässen Behälters 10, der als Küvette ausgebildet ist. Im Unterschied zur dritten Ausführungsform befinden sich die Materialveränderungen 3 derart an der Oberfläche des Körpers 1, dass der Körper 1 eine auch im Bereich der Materialveränderungen 3 insgesamt im Wesentlichen ebene Bodenoberfläche 122 bzw. -unterseite 122 des Körpers 1 bildet. Die Aussparungen 21 der opaken Schicht 2 setzen sich nicht im Boden 12 des Körpers 1 fort. Bei dieser Ausführungsform bildet die opake Schicht 2 den Boden beziehungsweise die Bodenoberfläche 100 des Behälters 10. Da die Materialveränderungen 3 an der Körperoberfläche angeordnet sind, kann das Material des Körpers 1 transparent oder opak sein.

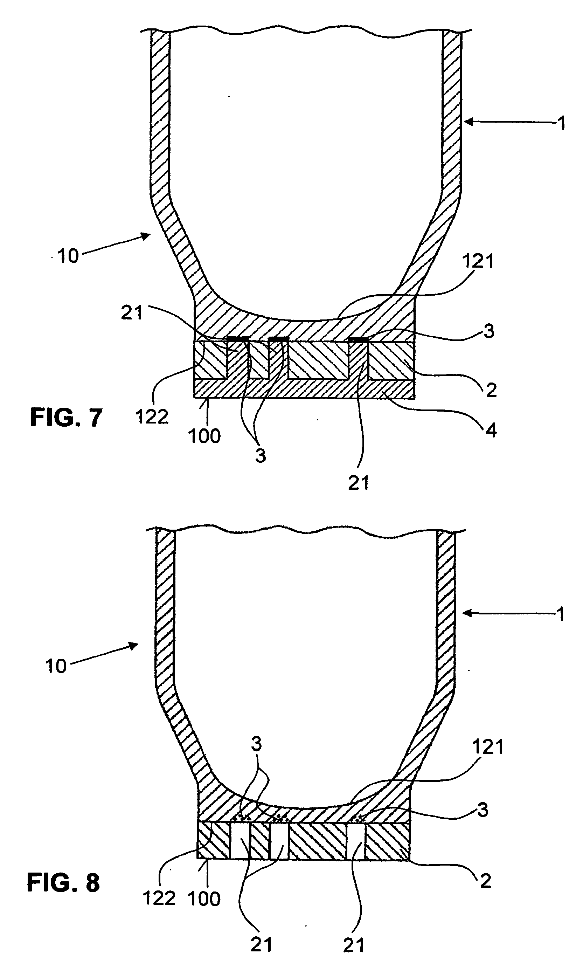

Figur 7 zeigt schematisch eine seitliche, zentrale Schnittansicht des unteren Bereichs einer fünften Ausführungsform eines erfindungsgemässen Behälters 10, der als Küvette ausgebildet ist, wobei es sich dabei um die vierte Ausführungsform mit einer zusätzlichen auf der opaken Schicht 2 angeordneten Schutzschicht 4 handelt, und wobei sich die Schutzschicht 4 vollständig in die Aussparungen 21 der opaken Schicht 2 hinein erstreckt. Bei dieser Ausführungsform bildet somit die Schutzschicht 4 die Bodenoberfläche 100 des Behälters 10. Analog zur Ausführungsform gemäss Figur 6 kann das Material des Körpers 1 transparent oder opak sein.

Figur 8 zeigt schematisch eine seitliche, zentrale Schnittansicht des unteren Bereichs einer sechsten Ausführungsform eines erfindungsgemässen Behälters 10, der als Küvette ausgebildet ist. Im Unterschied zur in der Figur 6 dargestellten Ausführungsform, stellen in dieser Ausführungsform die Materialveränderungen 3 eine Verfärbung von im Körper 1 eingebetteten Partikeln dar, wobei die Partikel z.B. Pigmente sind, und wobei die Verfärbung beispielsweise durch die Bestrahlung der Partikel mit einem Laserstrahl hervorgerufen werden kann. Bei dieser Ausführungsform bildet die opake Schicht 2 die Bodenoberfläche 100 des Behälters 10. Das Material des Körpers 1 ist transparent, damit das optische Lesegerät die Materialveränderungen 3 erkennen kann.

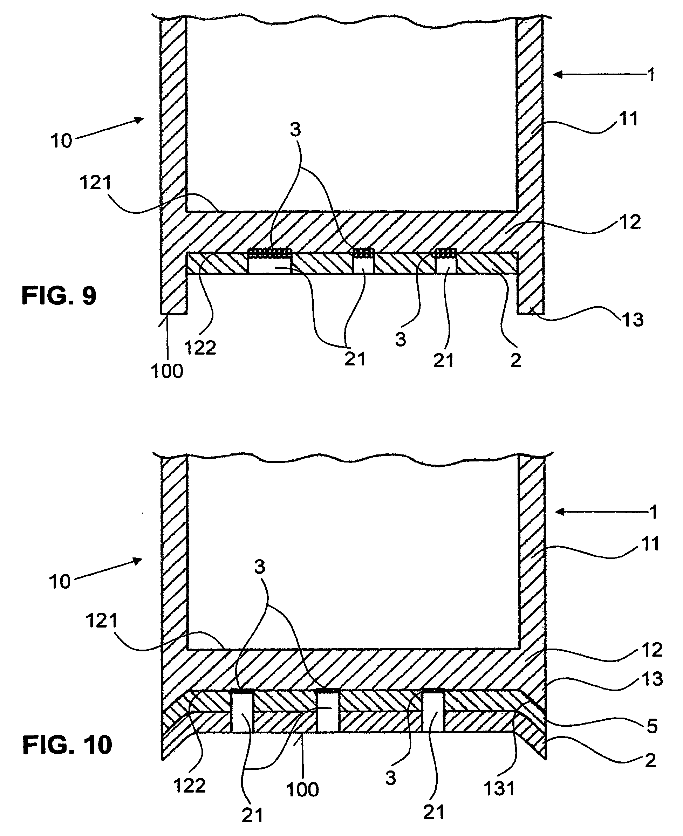

Figur 9 zeigt schematisch eine seitliche Schnittansicht des unteren Bereichs einer siebten Ausführungsform eines erfindungsgemässen Behälters 10, der als Küvette ausgebildet ist und einen Körper 1 aufweist, an dessen Boden 12 eine Auskragung 13 einstückig mit diesem ausgebildet ist und in einer im Wesentlichen senkrechten Richtung zur Bodenoberfläche 122 des Körpers 1 dieser vorsteht. Die Auskragung 13 erstreckt sich im Wesentlichen in der Verlängerung der umlaufenden Seitenwand 11 der Küvette und kann geschlossen umlaufend oder mit Unterbrüchen versehen sein. Der Übergang zwischen der Bodenoberfläche 122 des Körpers 1 und der Auskragung 13 ist in dieser Ausführungsform scharfkantig, d.h. die Auskragung 13 steht im Wesentlichen senkrecht auf der Bodenoberfläche 122. Die opake Schicht 2 ist an der Bodenoberfläche 122 angeordnet und erstreckt sich, ausserhalb der Aussparungen 21, im Wesentlichen über die gesamte Oberfläche 122. Die Auskragung 13 umrandet die opake Schicht 2 und steht dieser vor, sodass beim Abstellen der Küvette auf eine Ablagefläche, die opake Schicht 2 nicht mit dieser Ablagefläche in Kontakt kommt. Bei dieser Ausführungsform bildet somit der Körper 1 zumindest einen Teil der Bodenoberfläche 100 des Behälters 10 und dabei insbesondere denjenigen Teil der Bodenoberfläche 100, mit welchem der Behälter 10 auf eine Ablagefläche abstellbar ist. Eine transparente Schutzschicht ist bei dieser Ausführungsform nicht nötig, sie kann aber zur weiteren Erhöhung der Sicherheit trotzdem aufgebracht werden. Die Aussparungen 21 werden hier durch die Einwirkung eines Laserstrahls erzeugt, wobei die Materialveränderungen 3 bei dieser Ausführungsform vorzugsweise durch das Aufschäumen des Körpers 1 an dessen Bodenoberfläche 122 erreicht wird. Vorzugsweise wird das Aufschäumen mittels eines Laserstrahls realisiert. Das Material des Körpers 1 kann opak oder transparent sein.

Figur 10 zeigt schematisch eine seitliche Schnittansicht des unteren Bereichs einer achten Ausführungsform eines erfindungsgemässen Behälters 10, der als Küvette ausgebildet ist und einen einstückigen Körper 1 mit einem Boden 12 aufweist. Eine Auskragung 13 ist einstückig mit dem Boden 12 ausgebildet, steht diesem in einer im Wesentlichen senkrechten Richtung zur Bodenoberfläche 122 vor und erstreckt sich im Wesentlichen in der Verlängerung der umlaufenden Seitenwand 11 der Küvette, wobei die Auskragung geschlossen umlaufend oder mit Unterbrüchen versehen sein kann. Die innere Seitenfläche 131 der Auskragung 13 ist unter einem Winkel von 45 bis 75° bezüglich der Senkrechten auf der Bodenoberfläche 122 angeordnet. Die opake Schicht 2 ist durchgängig an der Bodenoberfläche 122, welche die inneren Seitenfläche 131 der Auskragung 13 umfasst, mittels einer transparenten Verbindungsschicht 5 angeordnet. Die Aussparungen 21 werden vorzugsweise durch die Einwirkung eines Laserstrahls erzeugt, wobei die Materialveränderungen 3 bei dieser Ausführungsform durch das Karbonisieren des Körpers 1 an dessen Bodenoberfläche 122, beziehungsweise durch die Karbonisierung des Materials des Körpers 1, welches die Bodenoberfläche 122 des Körpers 1 bildet, erreicht wird. Vorzugsweise wird das Karbonisieren mittels eines Laserstrahls realisiert. Bei dieser Ausführungsform bildet, wie in Figur 10 ersichtlich, die opake Schicht 2 die Bodenoberfläche 100 des Behälters 10. Das Material des Körpers 1 kann transparent oder opak sein.

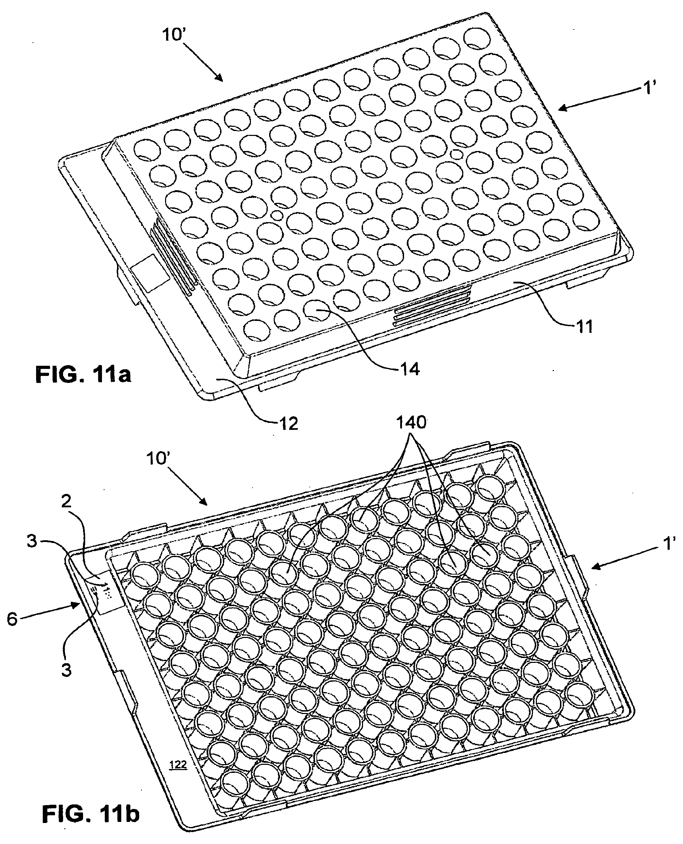

Figur 11a und 11b zeigen perspektivische Darstellungen eines erfindungsgemässen Behälters 10', der als Lager- oder Transportgestell zur Aufnahme von Küvetten ausgebildet ist, wobei die Figur 11a die Oberseite und die Figur 11b die Unterseite des Behälters 10' zeigt. Der Behälter 10' weist einen geschlossen umlaufenden Rand 11 und einen Boden 12 auf sowie mehrere Aufnahmepositionen 14 zur Aufnahme von Küvetten. Der Behälter 10' weist einen lager- oder transportgestellförmigen Körper 1' mit einer Bodenoberfläche 122 auf. Dieser lager- oder transportgestellförmige Körper 1' entspricht einem Lager- oder Transportgestell des Standes der Technik ohne maschinenlesbare Kodierung. Der Behälter 10' weist einen Lesebereich 6 auf, welcher mit maschinenlesbaren Daten versehen ist, welche von einem optischen Lesegerät von aussen her erfassbar sind. Der Lesebereich 6 weist die für das optische Lesegerät opake Schicht 2 und im Körper 1' erzeugte Materialveränderungen 3 auf, wobei die Lesbarkeit der maschinenlesbaren Daten bzw. der Kennzeichnung durch den optischen Kontrast zwischen der opaken Schicht 2 und den Materialveränderungen 3 gegeben ist. Wird auf einer auf der Unterseite des Lager- oder Transportgestells 10' gemäss den Figuren 11a sowie 11b angeordneten Öffnung 140 wenigstens einer Aufnahmeposition 14 eine nicht dargestellte Abdeckung angeordnet, welche teilweise flüssigkeitsdurchlässig ist, falls die Abdeckung zum Beispiel als Filter ausgebildet ist, oder welche flüssigkeitsundurchlässig ist, so resultiert durch diese konstruktive Änderung des Lager- oder Transportgestells eine erfindungsgemässe Mikrotiterplatte. Diese Mikrotiterplatte ist selbstverständlich nur beispielhaft und eine Vielzahl von Abwandlungen ist möglich.

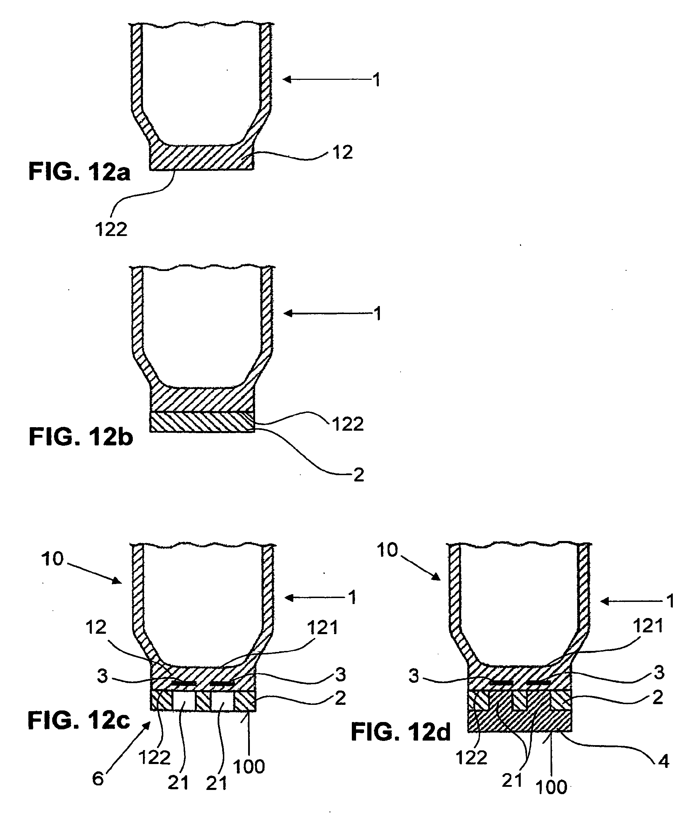

Figuren 12a bis 12d zeigen schematisch die Verfahrensschritte zur Herstellung eines erfindungsgemässen Behälters 10, welcher als Küvette ausgebildet ist. Figur 12a zeigt einen küvettenförmigen Körper 1, welcher einen Boden 12 mit einer Bodenoberfläche 122 aufweist und den Körper 1 des hergestellten erfindungsgemässen Behälters 10 gemäss den Figuren 12c und 12d bilden wird. Dieser wird mittels eines herkömmlichen Kunststoffspritzgussverfahrens hergestellt.

Nach der Herstellung des küvettenförmigen Körpers 1 gemäss Figur 12a wird auf dessen Bodenoberfläche 122 eine opake Schicht 2 angeordnet (Figur 12b). Die opake Schicht 2 kann direkt oder mittels einer transparenten Verbindungsschicht 5, wie beispielsweise eines Klebstoffes, an der Bodenoberfläche 122 angebracht werden. Für das Anbringen der opaken Schicht 2 können herkömmliche Verfahren wie das Anbringen einer Heissprägefolie, das Bedrucken mittels Tampon- oder Offsetdruck, das Anspritzen oder Angiessen verwendet werden. Ein Beispiel eines Angiessverfahrens ist das Zweikomponentenspritzgussverfahren, mittels welchem zuerst der küvettenförmige Körper 1 und danach die opake Schicht 2 hergestellt wird, oder mittels welchem zuerst die opake Schicht 2 und erst danach der küvettenförmige Körper 1 hergestellt wird. Ein weiteres Beispiel eines Angiessverfahrens ist das dem Fachmann bekannte In-mould-labeling (IML), bei welchem eine in eine Kavität eingelegte Folie, welche die opake Schicht 2 des herzustellenden erfindungsgemässen Behälters 10 bildet, mit Kunststoff hinterspritzt wird. Der Kunststoff, mit welchem die Folie hinterspritzt wird, bildet den küvettenförmigen Körper 1. Die Dicke der opaken Schicht 2 beträgt üblicherweise 1 µm bis 5 mm, vorzugsweise 1 µm bis 2 mm.

In der am küvettenförmigen Körper 1 befestigten opaken Schicht 2 werden Aussparungen 21 in der Form von maschinenlesbaren Daten, und im küvettenförmigen Körper 1 Materialveränderungen 3, wie in Figur 12c dargestellt, erzeugt und hierdurch der erfindungsgemässe Behälter 10 gemäss einer neunten Ausführungsform hergestellt, der als Küvette ausgebildet ist. Vorzugsweise wird eine Aussparung 21 durch das Einwirken eines Laserstrahls erzeugt und vorzugsweise wird anschliessend der freigelegte Bereich des Bodens 12 des küvettenförmigen Körpers 1 einer Materialveränderung 3 unterzogen, wie beispielsweise mittels eines Lasers. In Figur 12c sind beispielshaft zwei nebeneinander angeordnete Materialveränderungen 3 im Boden 12 des Körpers 1, welche durch Karbonsierung des den Boden 12 bildenden Materials mittels eines Lasers hergestellt worden sind, dargestellt. Nach diesem Verfahrensschritt bildet bei dieser Ausführungsform die opake Schicht 2 die Bodenoberfläche 100 des Behälters 10.

In einem weiteren Verfahrensschritt wird im Lesebereich 6, also im Bereich der Materialveränderungen 3 und der Aussparungen 21 des Behälters 10 eine transparente Schutzschicht 4 angeordnet und hierdurch die zehnte Ausführungsform eines erfindungsgemässen Behälters 10 gemäss Figur 12d hergestellt. Bei dieser Ausführungsform bildet, wie in Figur 12d ersichtlich, die Schutzschicht 4 die Bodenoberfläche 100 des Behälters 10.

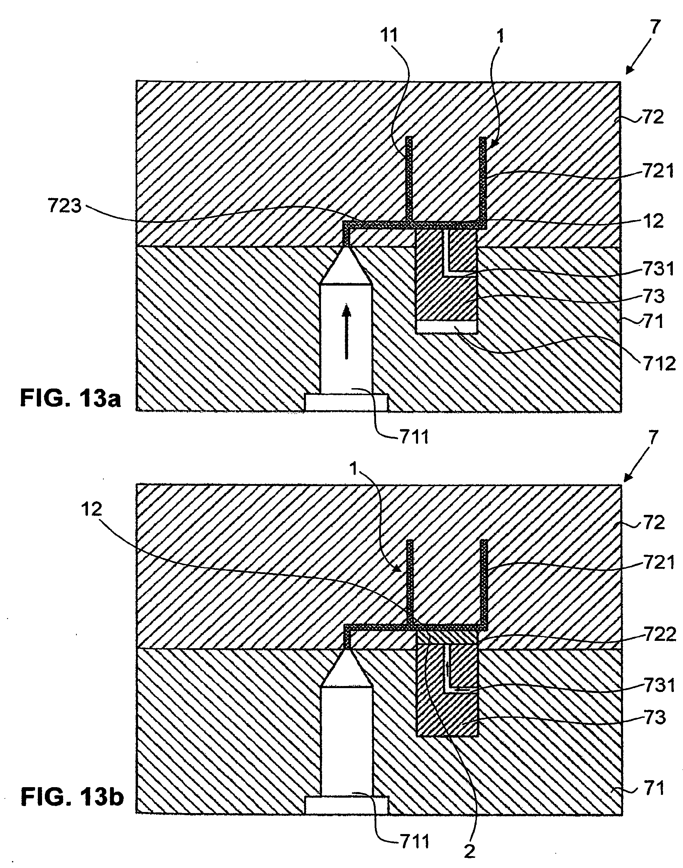

Figuren 13a und 13b zeigen schematisch zwei Verfahrensschritte eines Herstellungsverfahren zur Herstellung eines erfindungsgemässen Behälters in Form einer Küvette, wobei die beiden Verfahrensschritte ein Kunststoffspritzgussverfahren betreffen. Kunststoffspritzgussverfahren, insbesondere das anhand der Figuren 13a und 13b gezeigte Zweikomponentenspritzgussverfahren, sind dem Fachmann bekannt. In einem ersten Verfahrensschritt wird der küvettenförmige Körper 1 des herzustellenden erfindungsgemässen Behälters, welcher als Küvette ausgebildet ist, hergestellt, wie im Folgenden erläutert wird: Die Spritzgussmaschine 7 gemäss Figur 13a weist ein Formaussenteil 71 mit einer ersten Kunststoffzuführung 711, einen Formkern 72 mit einer Kavität 721 und einem Zufuhrkanal 723, und einen Formeinsatz 73 mit einer zweiten, nur angedeuteten Kunststoffzuführung 731 auf. Die Kavität 721 weist die Form des küvettenförmigen Körpers 1 des herzustellenden Behälters mit einer umlaufenden Seitenwandung 11 und einem integriertem Boden 12 auf. Der Formaussenteil 71 und der Formkern 72 sind so zueinander ausgerichtet, dass die erste Kunststoffzuführung 711 über den Zufuhrkanal 723 mit der Kavität 721 in Verbindung steht. Der Formeinsatz 73 befindet sich in einer ersten Position, bei welcher dieser im Formaussenteil 71 angeordnet ist und sich in den Formkern 72 hinein erstreckt, die Kavität 721 begrenzt und diese gegen aussen hin abschliesst. Der Formeinsatz 73 ist verschiebbar im Formaussenteil 71 angeordnet. Gegenüberliegend der Begrenzungsfläche zur Kavität 721 und im Formaussenteil 71 befindet sich angrenzend an den Formeinsatz 73 ein Freiraum 712, welcher die Verschiebung des Formeinsatzes 73 in Richtung zum Formaussenteil 71 hin in eine zweite Position ermöglicht.

Es wird nun über die erste Kunststoffzuführung 711 und den Zufuhrkanal 723 Kunststoff in die Kavität 721 eingespritzt, so dass die Kavität mit Kunststoff gefüllt wird, wie dies in Figur 13a dargestellt ist, und hierdurch der küvettenförmige Körper 1 gebildet.

In einem zweiten Verfahrensschritt wird nun der Formeinsatz 73 in eine zweite Position, wie in Figur 13b dargestellt, verschoben, so dass sich dieser in einer der Kavität 721 abgewandten Position befindet und so die an die Kavität 721 am Boden 12 angrenzende zusätzliche Kavität 722 freigibt, welche, wie in Figur 13b dargestellt, dann über die nur angedeutete, zweite Kunststoffzuführung 731 mit Kunststoff gefüllt wird und so die opake Schicht 2 am Boden des küvettenförmigen Körpers 1, gebildet wird. Vorzugsweise weist der Kunststoff, welcher in die zusätzliche Kavität 722 gespritzt wird, eine andere Zusammensetzung auf als derjenige der in die Kavität 721 gespritzt wird. Vorzugsweise ist der Kunststoff in der Kavität 721 transparent und derjenige in der zusätzlichen Kavität 722 opak. Der so hergestellte Körper 1, an dessen Boden 12 eine opake Schicht 2 angeordnet ist, wird nun, in einem weiteren nicht dargestellten Schritt, aus dem Formaussenteil 71 und dem Formkern 72 entformt, sowie in einem nächsten, nicht dargestellten Schritt, mit wenigstens einer Materialveränderung sowie wenigstens einer Aussparung, wie bereits beschrieben, versehen und hierdurch der erfindungsgemässe Behälter, welcher als Küvette ausgebildet ist, erzeugt.

Selbstverständlich ist die hier beschriebene Erfindung nicht auf die erwähnten Ausführungsformen beschränkt und eine Vielzahl von Abwandlungen ist möglich. Der Körper muss beispielsweise nicht zwingend einen Boden und eine umlaufende Seitenwand zur Begrenzung einer befüllbaren Kavität aufweisen, sondern kann zum Beispiel auch als ein einfaches Trägerteil ausgebildet sein, welches an einem beliebigen Behälter des Standes der Technik und insbesondere an einer herkömmliche Küvette, wie sie in der Figur 2 gezeigt ist, befestigt ist. Die in den Figuren 3, 4, 8, 12c, 12d dargestellten Aussparungen 21 können sich beispielsweise ebenfalls, wie anhand von Figur 5 beschrieben, bis zu den Materialveränderungen 3 hin erstrecken. Selbstverständlich müssen die Aussparungen 21 des Behälters 10 gemäss der Figur 5 im Querschnitt jeweils nicht als Kreisfläche ausgebildet sein, sondern können auch anders, wie beispielsweise quadratisch, ausgestaltet sein. Analog können die Aussparungen 21 der Behälter 10 gemäss den Figuren 3, 4, 6, 7, 8, 9, 10, 12c, 12d beispielsweise kreisflächenförmig, insbesondere als Kreisfläche, oder quadratisch ausgestaltet sein. Zudem muss die Kodierung des Behälters 10 gemäss Figur 5 nicht zwingend als Punktkodierung ausgebildet sein, sondern kann auch anders augebildet sein. Selbstverständlich können auch der Durchmesser D und / oder die Distanz d bei der Ausführungsform gemäss Figur 5 anders gewählt werden als beschrieben ist. Die in den Figuren 1 bis 10, 12c und 12d dargestellten Behälter 10, insbesondere deren Körper 1, sowie der Behälter 10' gemäss den Figuren 11a, und 11b, insbesondere dessen Körper 1', sind beispielhaft dargestellt und können auch anders ausgebildet sein. So muss beispielsweise die konkave Bodeninnenseite 121 der Körper 1, beziehungsweise der Behälter 10, gemäss den Figuren 3 bis 8, 12c und 12d nicht zwingend konkav sein und kann auch anders ausgestaltet sein, wie beispielsweise die Bodeninnenseite 121 der Körper 1, beziehungsweise der Behälter 10 gemäss den Figuren 9, 10. Ebenso muss die Bodenoberfläche 122 der Körper 1, beziehungsweise die Bodenoberfläche 100 der Behälter 10, nach den Figuren 1 bis 10, 12c und 12d nicht zwingend plan sein, sondern kann auch anders ausgebildet sein. Selbstverständlich müssen die Behälter 10 gemäss den Figuren 3, 7, 12d nicht zwingend eine Schutzschicht 4 aufweisen, sondern können auch keine Schutzschicht 4 aufweisen. Selbstverständlich kann auf der opaken Schicht 2 der Behälter 10 gemäss den Figuren 1, 4, 5, 6, 8, 9, 10 eine Schutzschicht 4 angeordnet sein. Die Körper 1 der Behälter 10 gemäss den Figuren 1 bis 10, 12c und 12d sowie der Körper 1' des Behälters 10' können zusätzlich oder anstatt der nebeneinanderliegenden Materialveränderungen 3 auch Materialveränderungen 3 aufweisen, welche übereinanderliegen. Zudem können die Behälter 10 gemäss den Figuren 5, 6, 7, 8, 9, 12c, 12d, analog zu den Behältern 10 nach den Figuren 3, 4, 10, auch eine Zwischenschicht 5 aufweisen. Bei den Behältern 10 gemäss den Figuren 3, 4 ist es auch möglich, dass die Aussparungen 21 sich durch die Zwischenschicht 5 hindurch erstrecken sowie gegebenenfalls sich im Küvettenboden 12 fortsetzen und bis zu den Materialveränderungen 3 hineinragen. Bei den Behältern 10 gemäss den Figuren 5, 6, 7, 8, 10, 12c, 12d muss die opake Schicht 2 ausserhalb der Aussparungen 21 nicht zwingend auf der gesamten Bodenoberfläche 122 des Körpers 1 angeordnet sein, sondern kann beispielsweise auch, wie in Figur 1 offenbart, ausserhalb der Aussparungen 21 nur teilweise auf der Bodenoberfläche 122 des Körpers 1 angeordnet sein. Bei den Behältern 10 gemäss den Figuren 1, 3, 4, 5, 6, 7, 8, 10, 12c, 12d kann selbstverständlich, analog zum Behälter 10 gemäss Figur 9, derjenige Teil der Bodenoberfläche 100 des Behälters 10, auf welchen der Behälter 10 auf eine Auflagefläche abstellbar ist, auch durch eine Auskragung 13 des Körpers 1, anstatt durch die opake Schicht 2 oder die Schutzschicht 4, gebildet sein. Die verschiedenen Elemente der in den Figuren 1 bis 10, 12c und 12d gezeigten Ausführungsformen können zudem beliebig miteinander kombinert werden. Eine Vielzahl von Abwandlungen ist denkbar. Auch bei der Ausführungsform des erfindungsgemässen Behälters gemäss den Figuren, 11a und 11b, beziehungsweise bei der anhand der Figuren 11a und 11b beschriebenen Mikrotiterplatte, ist eine Vielzahl von Abwandlungen denkbar.

**BEZUGSZEICHENLISTE**

| | | | |
|---|---|---|---|
| 1, 1' | Körper | 3 | Materialveränderung |
| 10, 10' | Behälter | 4 | Schutzschicht |
| 100 | Bodenoberfläche des | 5 | Verbindungsschicht |
| | Behälters | 6 | Lesebereich |
| 101 | Aussenseite | 7 | Spritzgussmaschine |
| 102 | Kavität | 71 | Formaussenteil |
| 11 | Seitenwand | 711 | erste Kunststoffzufuhr |
| 12 | Boden des Körpers | 712 | Freiraum |
| 121 | Bodeninnenseite | 72 | Formkern |
| 122 | Bodenoberfläche des Körpers | 721 | Kavität |
| 13 | Auskragung | 722 | zusätzliche Kavität |
| 131 | innere Seitenfläche | 723 | Zufuhrkanal |
| 14 | Aufnahmeposition | 73 | Formeinsatz |
| 140 | Öffnung | 731 | zweite Kunststoffzufuhr |
| 2 | opake Schicht | d | Distanz |
| 21 | Aussparungen | D | Durchmesser |
| 210 | Mittelpunkt | | |

## Patentansprüche

1. Behälter (10, 10') für den Laborbereich, aufweisend einen Körper (1) sowie eine auf den Körper aufgebrachte, für ein optisches Lesegerät opake Schicht (2), welche Aussparungen (21) in der Form von maschinenlesbaren Daten aufweist, wobei der Körper (1) zumindest eine lokale Materialveränderung (3) aufweist, und wobei die Materialveränderung (3) gemeinsam mit der opaken Schicht (2) einen Lesebereich (6) bildet, in welchem aufgrund des optischen Kontrastes zwischen der Materialveränderung (3) und der opaken Schicht (2) die maschinenlesbaren Daten von einem optischen Lesegerät von aussen her erfassbar sind.

2. Behälter (10) gemäss Anspruch 1, wobei der Behälter (10) eine Küvette ist.

3. Behälter (10') gemäss Anspruch 1, wobei der Behälter (10') ein Lager- oder Transportgestell mit einer Vielzahl von Aufnahmepositionen insbesondere zur Aufnahme von Küvetten oder eine Mikrotiterplatte ist.

4. Behälter (10, 10') gemäss einem der Ansprüche 1 bis 3, wobei der Körper (1) zumindest teilweise, insbesondere im Wesentlichen, den Boden des Behälters (10, 10') bildet.

5. Behälter (10, 10') gemäss Anspruch 4, wobei der Körper (1) zudem eine sich vom Boden aus erstreckende, umlaufende Seitenwand bildet, und wobei der Boden und die Seitenwand gemeinsam eine befüllbare Kavität des Behälters (10, 10') begrenzen.

6. Behälter (10, 10') gemäss einem der Ansprüche 1 bis 5, wobei die Materialveränderung (3) an einer Oberfläche des Körpers (1) angeordnet ist.

7. Behälter (10, 10') gemäss einem der Ansprüche 1 bis 6, wobei die Materialveränderung (3) innerhalb des Körpers (1) angeordnet ist.

8. Behälter (10, 10') gemäss einem der Ansprüche 1 bis 7, wobei der Körper (1) aus einem für ein optisches Lesegerät transparenten oder semi-transparenten Material hergestellt ist.

9. Behälter (10, 10') gemäss einem der Ansprüche 1 bis 6, wobei der Körper (1) aus einem für das optische Lesegerät opaken Material hergestellt ist.

10. Behälter (10, 10') gemäss einem der Ansprüche 1 bis 9, wobei eine für ein optisches Lesegerät transparente oder semi-transparente Schutzschicht (4) auf der opaken Schicht (2) angeordnet ist.

11. Behälter (10, 10') gemäss einem der Ansprüche 1 bis 10, wobei eine für ein optisches Lesegerät transparente oder semi-transparente Verbindungsschicht (5) zwischen dem Körper (1) und der opaken Schicht (2) angeordnet ist.

12. Verfahren zur Kennzeichnung eines Behälters (10, 10') für den Laborbereich, welcher einen Körper (1) mit einer darauf aufgebrachten opaken Schicht (2) aufweist, aufweisend zumindest die folgenden Schritte in beliebiger Reihenfolge:
- Erzeugen von Aussparungen (21) in der Form von maschinenlesbaren Daten in der opaken Schicht (2); und
- Erzeugen von zumindest einer lokalen Materialveränderung (3) im oder am Körper (1),
wobei die Aussparungen (21) und die Materialveränderung (3) derart erzeugt werden, dass die opake Schicht (2) gemeinsam mit der Materialveränderung (3) einen Lesebereich (6) bildet, in welchem aufgrund des optischen Kontrastes zwischen der Materialveränderung (3) und der opaken Schicht (2) die maschinenlesbaren Daten von einem optischen Lesegerät von aussen her erfassbar sind.

13. Verfahren gemäss Anspruch 12, wobei das Erzeugen der Aussparungen (21) in der opaken Schicht (2) und/oder die Materialveränderung (3) des Körpers (1) durch ein chemisches oder physikalisches Verfahren, insbesondere mittels eines Lasers, realisiert werden/wird.

## Claims

1. Container (10, 10') for the laboratory area, having a body (1) and a layer (2) that is opaque to an optical reader, is applied to the body and has clearances (21) in the form of machine-readable data, the body (1) having at least one local material modification (3), and the material modification (3) together with the opaque layer (2) forming a reading area (6), in which the machine-readable data can be read from the outside by an optical reader on the basis of the optical contrast between the material modification (3) and the opaque layer (2).

2. Container (10) according to Claim 1, the container (10) being a cuvette.

3. Container (10') according to Claim 1, the container (10') being a storing or transporting rack with a multiplicity of receiving positions, in particular for receiving cuvettes, or a microtitre plate.

4. Container (10, 10') according to one of Claims 1 to 3, the body (1) forming at least partially, in particular substantially, the bottom of the container (10, 10').

5. Container (10, 10') according to Claim 4, the body (1) also forming a surrounding side wall, extending from the bottom, and the bottom and the side wall together bounding a cavity that can be filled of the container (10, 10').

6. Container (10, 10') according to one of Claims 1 to 5, the material modification (3) being arranged on a surface of the body (1).

7. Container (10, 10') according to one of Claims 1 to 6, the material modification (3) being arranged within the body (1).

8. Container (10, 10') according to one of Claims 1 to 7, the body (1) being produced from a material that is transparent or semi-transparent to an optical reader.

9. Container (10, 10') according to one of Claims 1 to 6, the body (1) being produced from a material that is opaque to the optical reader.

10. Container (10, 10') according to one of Claims 1 to 9, a protective layer (4) that is transparent or semi-transparent to an optical reader being arranged on the opaque layer (2).

11. Container (10, 10') according to one of Claims 1 to 10, a bonding layer (5) that is transparent or semi-transparent to an optical reader being arranged between the body (1) and the opaque layer (2).

12. Method for marking a container (10, 10') for the laboratory area, which has a body (1) with an opaque layer (2) applied to it, having at least the following steps in any desired sequence:
- creating clearances (21) in the form of machine-readable data in the opaque layer (2); and
- creating at least one local material modification (3) in or on the body (1),
the clearances (21) and the material modification (3) being created in such a way that the opaque layer (2) together with the material modification (3) forms a reading area (6), in which the machine-readable data can be read from the outside by an optical reader on the basis of the optical contrast between the material modification (3) and the opaque layer (2).

13. Method according to Claim 12, the creation of the clearances (21) in the opaque layer (2) and/or the material modification (3) of the body (1) being realized by a chemical or physical process, in particular by means of a laser.

## Revendications

1. Conteneur (10, 10') pour le domaine de laboratoire, présentant un corps (1) ainsi que une couche opaque (2) pour appareils de lecture optique disposé sur le corps, lequel présente des évidements (21) en forme de données lisible par machine, où le corps présente au moins une variation de matériau (3) locale, et où la variation de matériau (3) forme un domaine de lecture (6) conjointement avec la couche opaque (2) dans lequel les données lisibles par machine peuvent être saisies de l'extérieur par un lecteur optique en raison du contraste optique entre variation de matériau (3) et la couche opaque (2).

2. Conteneur (10) selon la revendication 1, où le conteneur (10) est une cuvette.

3. Conteneur (10') selon la revendication 1, où le conteneur (10') est un râtelier de stockage ou de transport ayant une pluralité de positions de réception, en particulier pour la réception de cuvettes ou de plaques micro titre.

4. Conteneur (10, 10') selon une des revendications 1 à 3, où le corps (1) est au moins partiellement, en particulier essentiellement, le fond d'un conteneur (10, 10').

5. Conteneur (10, 10') selon la revendication 4, où le corps (1) forme en outre une paroi latérale sertissante s'étendant depuis le fond, et/ou le fond et la paroi latérale délimitent conjointement une cavité du conteneur (10, 10') remplissable.

6. Conteneur (10, 10') selon une des revendications 1 à 5, où la variation de matériau (3) est disposée sur une surface du corps (1).

7. Conteneur (10, 10') selon une des revendications 1 à 6, où la variation de matériau (3) est disposée à l'intérieur de corps (1).

8. Conteneur (10, 10') selon une des revendications 1 à 7, où le corps (1) est fabriqué à partir d'un matériau transparent ou semi-transparent pour un lecteur optique.

9. Conteneur (10, 10') selon une des revendications 1 à 6, où le corps (1) est fabriqué à partir d'un matériau opaque pour le lecteur optique.

10. Conteneur (10, 10') selon une des revendications 1 à 9, où une couche protectrice (4) transparente ou semi-transparente pour un lecteur optique est disposée sur la couche opaque (2).

11. Conteneur (10, 10') selon une des revendications 1 à 10, où une couche de connexion (5) transparent ou semi-transparent pour un lecteur optique est dispose entre le corps (1) et la couche opaque (2).

12. Procédé pour le marquage d'un conteneur (10, 10') pour le domaine de laboratoire, qui présente un corps (1) avec une couche opaque (2) appliquée sur celui-ci, présentant au moins les étapes suivantes dans n'importe quel ordre :
- créer des évidements (21) dans la couche opaque (2) sous forme de données lisibles par machine ; et
- créer au moins une variation de matériau (3) locale dans ou sur le corps (1),
où les évidements (21) et la variation de matériau (3) sont créés de sorte que la couche opaque (2) forme un domaine de lecture (6) conjointement avec la variation de matériau (3), dans lequel en raison du contraste optique entre la variation de matériaux (3) et la couche opaque (2) les données lisibles par machine peuvent être saisies de l'extérieur par un lecteur optique.

13. Procédé selon la revendication 12, ou la création des évidements (21) dans la couche opaque (2) et/ou la variation de matériau (3) dans le corps (1) sont réalisées au moyen d'un procédé chimique ou physique, en particulier au moyen d'un laser.
